# EUROPEAN PATENT APPLICATION

(11) **EP 4 454 791 A1**
(43) Date of publication of application: **30.10.2024**
(21) Application number: 23170387.7
(22) Date of filing: 27.04.2023
(51) Int. Cl.: B23B 27/10, B23B 27/16

(54) **A TOOLHOLDER AND A CUTTING TOOL COMPRISING SUCH A TOOLHOLDER**

(71) Applicant: Seco Tools AB, 737 82 Fagersta (SE)
(72) Inventor: Thelin, Jimmy, 737 82 Fagersta (SE)
(74) Representative: Sandvik

(57) **Abstract**

The invention is related to a toolholder (100) comprising an internal coolant channel (104) configured to convey a coolant flowing in a flow direction F from at least one coolant inlet (106) to at least one coolant outlet (108,110), wherein the toolholder (100) further comprises a switching element (150), wherein the switching element (150) is arranged in the internal coolant channel (104), wherein the internal coolant channel (104) comprises a first part (112) and a second part (114), wherein the first part (112) is arranged upstream the switching element (150), and wherein the second part (114) is arranged downstream the switching element (150), wherein the switching element (150) is configured to alternate between an open state and a closed state upon impact with the coolant flowing through the internal coolant channel (104), wherein
-in the open state, the first part (112) is in fluid communication with the second part (114),
-in the closed state, the first part (112) is sealed off from the second part (114).

The invention also relates to a cutting tool (600) comprising such a toolholder (100).

## Description

### TECHNICAL FIELD

The present invention relates to a toolholder and a cutting tool comprising such a toolholder.

### BACKGROUND

In some cutting applications, very high temperatures are generated which results in a high heat load on the cutting tool which leads to a decreased lifetime of the cutting tool.

In order to decrease the temperature and thereby increasing the lifetime of the tool, coolant could be delivered as close to the cutting edge as possible. A number of cooling systems are available on the market today where coolant delivery is supplied through the toolholder at high pressure, e.g. JP 3317783 B2.

However, in some applications, a problem with the existing systems is that they are unsatisfactory in their ability to reduce the heat load of the cutting edge and thereby increase the lifetime of the cutting tool.

### SUMMARY OF THE INVENTION

It is an object of the present invention to overcome, or at least partly overcome, said problem by introducing a toolholder and a cutting tool comprising such a toolholder.

The object of the present invention is achieved by a toolholder comprising a cutting interface for receiving a cutting element, wherein
the toolholder further comprises an internal coolant channel having an inner wall, wherein the internal coolant channel extends from at least one coolant inlet to at least one coolant outlet, wherein
the internal coolant channel is configured to convey a coolant flowing in a flow direction F from the at least one coolant inlet to the at least one coolant outlet, wherein
the toolholder further comprises a switching element, wherein the switching element is arranged in the internal coolant channel, wherein the internal coolant channel comprises a first part and a second part, wherein the first part is arranged upstream the switching element, and wherein the second part is arranged downstream the switching element, wherein
the switching element is configured to alternate between an open state and a closed state upon impact with the coolant flowing through the internal coolant channel, wherein
   - in the open state, the first part is in fluid communication with the second part,
   - in the closed state, the first part is sealed off from the second part.

By providing the toolholder with a switching element arranged in the internal coolant channel which is configured to alternate between an open state and a closed state upon impact with the coolant flowing through the internal coolant channel, the coolant is alternately turned on and off, and thereby generating a pulsed flow of coolant exiting from the at least one coolant outlet. This impact the pressure and temperature during the cutting process and improves the breaking of chips generated during the cutting process. The heat load on the cutting tool is thereby reduced and the lifetime of the cutting tool is improved.

The term "coolant" represents a fluid, either in liquid or gaseous form, for improving the cutting conditions and also the tool life. This type of fluid is also commonly designated as "coolant fluid", "cutting fluid", "cutting oil", or "lubrication fluid".

In the open state, the first part is in fluid communication with the second part, which means that coolant can flow from the first part to the second part.

In the closed state, the first part is sealed off from the second part, which means that no coolant can flow from the first part to the second part.

According to an embodiment, the switching element is made of a lightweight material, e.g. a polymer.

By having the switching element made of a lightweight material, the alternation between the open and closed states is facilitated. Further, the switching element's impact on the total weight of the toolholder is reduced.

According to an embodiment, the switching element comprises a central axis A, wherein the central axis A is oriented perpendicular to the flow direction F, wherein the switching element is configured to rotate in a rotational direction R around the central axis A upon impact with the coolant flowing through the internal coolant channel.

By having the switching element configured to rotate around the central axis A upon impact with the coolant flowing through the internal coolant channel, a continuous alternation between the open and closed state is provided in the toolholder.

According to an embodiment, the switching element comprises:
- a first end surface;
- a second end surface; and
- a circumferential side surface connecting the first end surface and the second end surface, wherein

the switching element comprises a central axis A extending from the first end surface to the second end surface, wherein
the switching element comprises a plurality of indentions extending from the circumferential side surface towards the central axis A, wherein
the plurality of indentions is separated from each other in a circumferential direction around the central axis A.

By having the switching element arranged as described above, the coolant can flow from the first part to the second part via the indentions in the open state, while no indentions permit a coolant flow from the first part to the second part in the closed state.

According to an embodiment, the switching element comprises 2-4 indentions.

By having 2-4 indentions in the switching element, the length of the coolant pulses exiting the coolant outlet have a length that facilitates the breakage of chips generated in the cutting process when the toolholder is mounted in a conventional CNC-machine.

According to an embodiment, each of the plurality of indentions comprises a first side surface and a second side surface, wherein the first side surface is connected to the second side surface at an intersection, wherein the first side surface extends from the circumferential side surface to the intersection, and wherein the second side surface extends from the circumferential side surface to the intersection, wherein the first side surface and the second side surface are planar surfaces.

By having the switching element arranged as described above, the rotation of the switching element around the central axis A is facilitated.

According to an embodiment, the first side surface and the second side surface are oriented at an angle α to each other, wherein α is 55°-89°, preferably 75°-85°.

By having the switching element arranged as described above, the rotation of the switching element around the central axis A is further facilitated.

According to an embodiment, the first side surface has a cross-sectional area A₁ and the second side surface has a cross-sectional area A₂, wherein A₂ > A₁, and wherein the central axis A is oriented perpendicular to the flow direction F and wherein the coolant flowing through the internal coolant channel is configured to hit the first side surface, causing the switching element to rotate in a rotational direction R around the central axis A.

By having the switching element arranged as described above, the rotation of the switching element around the central axis A is further facilitated. By having the cross-sectional area A₂ being larger than the cross-sectional area A₁, an increased lever is provided, which facilitates the rotation of the switching element.

According to an embodiment, A₂ > 1.1^{∗}A₁.

By having the switching element arranged as described above, the rotation of the switching element around the central axis A is further facilitated.

According to an embodiment, the first end surface and the second end surface have a circular shape.

By arranging the first end surface and the second end surface in circular shapes, the rotation of the switching element is further facilitated.

According to an embodiment, the switching element comprises a through hole extending from the first end surface to the second end surface, wherein the through hole has a central axis C, wherein the central axis C coincides with the central axis A.

By providing the switching element with a through hole extending from the first end surface to the second end surface, the securing of the switching element in the internal coolant channel can be improved by providing a fastening element, such as a locking pin or a screw, through the through hole.

According to an embodiment, the switching element is a paddle wheel.

By arranging the switching element as a paddle wheel, a continuous alternation between the open and closed state is provided in the toolholder since the coolant flowing through the internal coolant channel hits the paddles and forcing the switching element to rotate between the open state where the paddles are arranged to let coolant flow from the first part to the second part, and the closed state where the paddles block the flow of coolant from the first part to the second part.

According to an embodiment, the switching element is a pressure relief valve.

By arranging the switching element as a pressure relief valve, a continuous alternation between the open and closed state is provided in the toolholder. When the fluid pressure in the first part reaches a threshold value, the pressure relief valve opens and let the coolant flow from the first part to the second part. When the fluid pressure in the first part falls below the threshold value, the pressure relief valve closes and prevent the coolant from flowing from the first part to the second part.

According to an embodiment, the toolholder further comprises a sealing element arranged between the switching element and the inner wall of the internal coolant channel. According to an embodiment, the sealing element is a gasket.

By arranging a sealing element between the switching element and the inner wall of the internal coolant channel, the risk of coolant leaking from the first part to the second part in the closed state is reduced.

According to an embodiment, the switching element has a central axis A, and wherein the switching element has a maximum cross-sectional area A₃ perpendicular to the central axis A, and wherein the toolholder further comprises an opening having a central axis B, and wherein the opening has a cross-sectional area A₄, wherein the central axis B coincides with the central axis A, wherein the switching element is accessible via the opening, and wherein A₄ ≥ A₃.

By having the switching element accessible via the opening, the switching element can be removed from the toolholder and being replaced if necessary. The lifetime of the toolholder can thereby be prolonged.

According to an embodiment, the opening has a removable sealing element arranged therein. According to an embodiment, the sealing element is a gasket.

By providing a removable sealing element in the opening, the risk of coolant leaking from the internal coolant channel is reduced.

According to an embodiment, the switching element is secured in the internal coolant channel by a fastening element extending through the switching element. According to an embodiment, the fastening element is a locking pin.

By having the switching element secured in the internal coolant channel by a fastening element extending through the switching element, the risk of the switching element being misplaced in the internal coolant channel is reduced.

According to an embodiment, the at least one coolant outlet is directed towards the cutting interface.

By directing the at least one coolant outlet towards the cutting interface, the coolant is directed towards the position where the chips are generated and the breaking of the chips is improved.

According to an embodiment, the second part comprises at least two branches, wherein each of the branches is in fluid communication with a coolant outlet.

By having at least two branches in the second part, coolant can be directed towards different parts of the cutting element provided in the cutting interface. The breaking of the chips is thereby improved.

The object of the present invention is further achieved by a cutting tool comprising:
- a toolholder as described above;
- a cutting element comprising a cutting edge; and
- a fastening element, wherein
the cutting element is secured in the cutting interface by the fastening element.

The cutting tool is preferably a metal cutting tool. According to an embodiment, the cutting tool is a turning tool.

The cutting element is preferably a metal cutting element for performing a metal cutting operation, such as turning, milling, drilling, boring or reaming.

According to an embodiment, the cutting element is a cubic boron nitride (CBN) cutting element, a polycrystalline diamond (PCD) cutting element, a cemented carbide cutting element, a cermet cutting element, or a ceramic cutting element.

According to an embodiment, the cutting element being any of a cutting insert, a drill, an end mill, a boring tool, or a reamer.

The cutting insert is preferably an indexable cutting insert.

The fastening element can be any type of conventional fastening element, such as a screw, a clamp or a locking pin. The fastening element is preferably a clamp configured to clamp the cutting element in the cutting interface.

According to an embodiment, the cutting element is a cutting insert comprising a rake surface and a clearance surface, wherein the cutting edge is arranged at the intersection between the rake surface and the clearance surface, wherein the at least one coolant outlet is directed towards the rake surface, the clearance surface, or the cutting edge.

By directing the at least one coolant outlet towards the rake surface, the clearance surface, or the cutting edge, the coolant is directed towards the position where the chips are generated and the breaking of the chips is improved.

According to an embodiment, the fastening element comprises at least one internal coolant channel extending from at least one coolant inlet to at least one coolant outlet, wherein the at least one internal coolant channel in the fastening element is arranged in fluid communication with the second part.

By having the at least one internal coolant channel in the fastening element arranged in fluid communication with the second part, coolant can flow from the second part to the at least one internal coolant channel in the fastening element.

By having at least one internal coolant channel arranged in the fastening element, the coolant can be delivered closer to the cutting edge. The breaking of generated chips is thereby improved.

### BRIEF DESCRIPTION OF THE DRAWINGS

Figure 1 schematically illustrates a perspective view of a toolholder according to an embodiment of the invention.
Figure 2 schematically illustrates a bottom view of the toolholder illustrated in figure 1.
Figure 3 schematically illustrates a perspective view of the switching element arranged in the toolholder illustrated in figure 1.
Figure 4 schematically illustrates a side view of the switching element illustrated in figure 3.
Figure 5 schematically illustrates a cross-section along line IV-IV in figure 4.
Figure 6 schematically illustrates a perspective view of a cutting tool comprising the toolholder illustrated in figure 1.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that the disclosure will be thorough and complete, and will fully convey the scope of the invention to those skilled in the art. Like reference numbers refer to like elements throughout. The elements illustrated in the drawings are not necessary according to scale. Some elements might have been enlarged in order to clearly illustrate those elements.

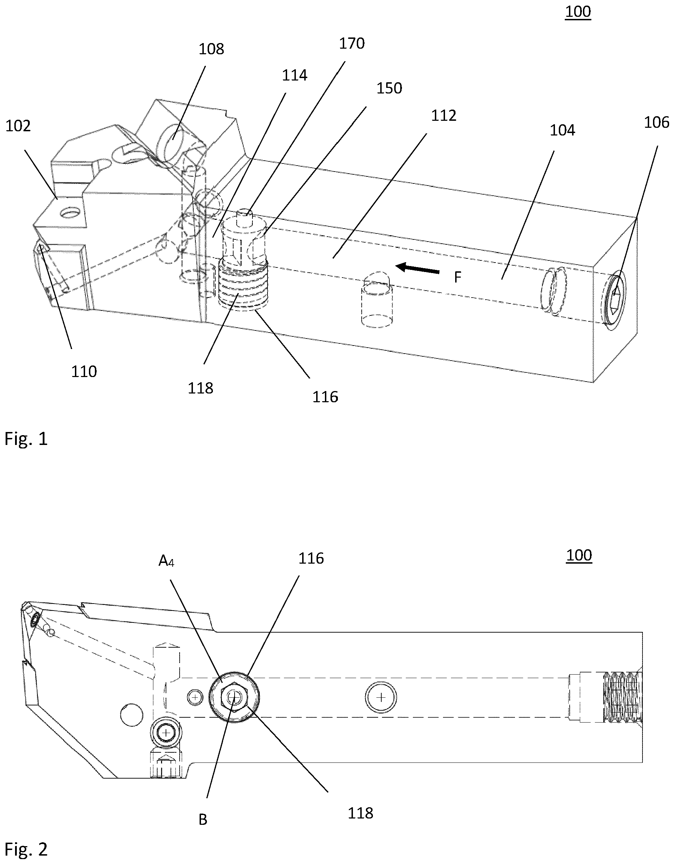

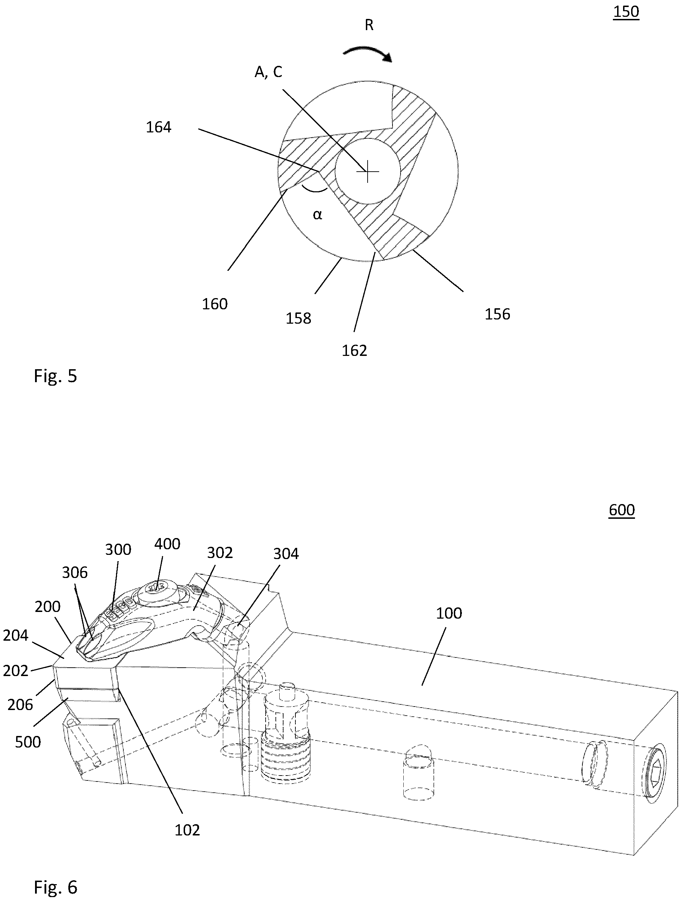

Figure 1 schematically illustrates a perspective view of a toolholder (100) according to an embodiment of the invention. The toolholder (100) comprising a cutting interface (102) in form of an insert pocket for receiving a cutting element (200), c.f. figure 6. The toolholder (100) further comprises an internal coolant channel (104), which is illustrated in phantom. The internal coolant channel (104) extends from a coolant inlet (106) to two coolant outlets (108,110). The internal coolant channel (104) is configured to convey a coolant flowing in a flow direction F from the coolant inlet (106) to the coolant outlets (108,110). The coolant outlets (108,110) are directed towards the cutting interface (102). The toolholder (100) further comprises a switching element (150) in form of a paddle wheel, wherein the switching element (150) is arranged in the internal coolant channel (104). The internal coolant channel (104) comprises a first part (112) and a second part (114), wherein the first part (112) is arranged upstream the switching element (150), and wherein the second part (114) is arranged downstream the switching element (150). The switching element (150) is configured to alternate between an open state and a closed state upon impact with the coolant flowing through the internal coolant channel (104), wherein
- in the open state, the first part (112) is in fluid communication with the second part (114),
- in the closed state, the first part (112) is sealed off from the second part (114).

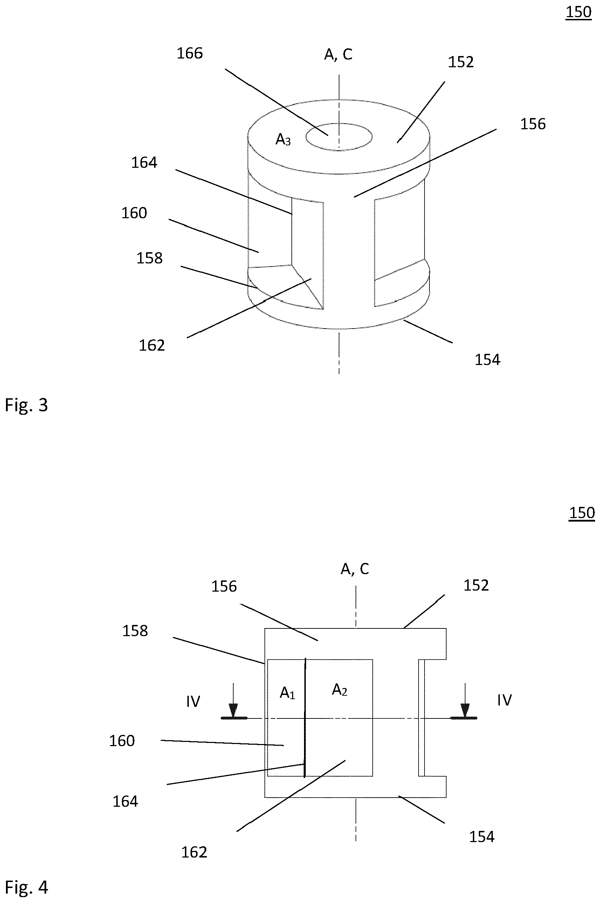

The switching element (150) comprises a central axis A, c.f. figure 3, wherein the central axis A is oriented perpendicular to the flow direction F, wherein the switching element (150) is configured to rotate in a rotational direction R, c.f. figure 5, around the central axis A upon impact with the coolant flowing through the internal coolant channel (104). The switching element (150) is secured in the internal coolant channel (104) by a fastening element (170) in form of a locking pin extending through the switching element (150). The toolholder (100) further comprises an opening (116) having a removable sealing element (118) arranged therein, wherein the switching element (150) is accessible via the opening (116).

Figure 2 schematically illustrates a bottom view of the toolholder illustrated in figure 1. The opening (116) having a central axis B, wherein the central axis B coincides with the central axis A. The opening (116) has a cross-sectional area A₄.

Figure 3 schematically illustrates a perspective view of the switching element (150) arranged in the toolholder (100) illustrated in figure 1. The switching element (150) comprises a first end surface (152), a second end surface (154), and a circumferential side surface (156) connecting the first end surface (152) and the second end surface (154). The central axis A extends from the first end surface (152) to the second end surface (154). The switching element (150) comprises three indentions (158), c.f. figure 5, extending from the circumferential side surface (156) towards the central axis A, wherein the indentions (158) are separated from each other in a circumferential direction around the central axis A. Each of the indentions (158) comprises a first side surface (160) and a second side surface (162), wherein the first side surface (160) is connected to the second side surface (162) at an intersection (164), wherein the first side surface (160) extends from the circumferential side surface (156) to the intersection (164), and wherein the second side surface (162) extends from the circumferential side surface (156) to the intersection (164), wherein the first side surface (160) and the second side surface (162) are planar surfaces. The first end surface (152) and the second end surface (154) having a circular shape. The switching element (150) further comprises a through hole (166) extending from the first end surface (152) to the second end surface (154), wherein the through hole (166) has a central axis C coinciding with the central axis A. The switching element (150) has a maximum cross-sectional area A₃ perpendicular to the central axis A.

Figure 4 schematically illustrates a side view of the switching element (150) illustrated in figure 3. The first side surface (160) has a cross-sectional area A₁, and the second side surface (162) has a cross-sectional area A₂.

Figure 5 schematically illustrates a cross-section along line IV-IV in figure 4. The first side surface (160) and the second side surface (162) are oriented at an angle α to each other.

Figure 6 schematically illustrates a cutting tool (600) in form of a turning tool, comprising the toolholder (100) illustrated in figure 1. The cutting tool (600) further comprises a cutting element (200) in form of a cutting insert having a cutting edge (202), and a fastening element (300) in form of a clamp configured to clamp the cutting insert (200) in the cutting interface (102). The clamp (300) is secured to the toolholder (100) by a screw (400). The cutting tool (600) further comprises a shim (500) arranged in the cutting interface (102). The cutting insert (200) comprises a rake surface (204) and a clearance surface (206). The cutting edge (202) is arranged at the intersection between the rake surface (204) and the clearance surface (206). The clamp (300) comprises two internal coolant channels (302) extending from a coolant inlet (304) to a coolant outlet (306). The internal coolant channels (302) are arranged in fluid communication with the second part (114). The coolant outlet (110) is directed towards the clearance surface (206) and the coolant outlets (306) are directed towards the rake surface (204).

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more". All structural and functional equivalents to the elements of the above-described embodiments that are known to those of ordinary skill in the art are expressly incorporated herein by reference and are intended to be encompassed hereby.

## Claims

1. Toolholder (100) comprising a cutting interface (102) for receiving a cutting element (200), wherein
the toolholder (100) further comprises an internal coolant channel (104) having an inner wall, wherein the internal coolant channel (104) extends from at least one coolant inlet (106) to at least one coolant outlet (108,110), wherein
the internal coolant channel (104) is configured to convey a coolant flowing in a flow direction F from the at least one coolant inlet (106) to the at least one coolant outlet (108,110), wherein
the toolholder (100) further comprises a switching element (150), wherein the switching element (150) is arranged in the internal coolant channel (104), wherein the internal coolant channel (104) comprises a first part (112) and a second part (114), wherein the first part (112) is arranged upstream the switching element (150), and wherein the second part (114) is arranged downstream the switching element (150), **characterized in that**
the switching element (150) is configured to alternate between an open state and a closed state upon impact with the coolant flowing through the internal coolant channel (104), wherein
- in the open state, the first part (112) is in fluid communication with the second part (114),
- in the closed state, the first part (112) is sealed off from the second part (114).

2. The toolholder (100) according to claim 1, wherein the switching element (150) comprises a central axis A, wherein the central axis A is oriented perpendicular to the flow direction F, wherein the switching element (150) is configured to rotate in a rotational direction R around the central axis A upon impact with the coolant flowing through the internal coolant channel (104).

3. The toolholder (100) according to any of the preceding claims, wherein the switching element (150) comprises:
- a first end surface (152);
- a second end surface (154); and
- a circumferential side surface (156) connecting the first end surface (152) and the second end surface (154), wherein
the switching element (150) comprises a central axis A extending from the first end surface (152) to the second end surface (154), wherein
the switching element (150) comprises a plurality of indentions (158) extending from the circumferential side surface (156) towards the central axis A, wherein
the plurality of indentions (158) is separated from each other in a circumferential direction around the central axis A.

4. The toolholder (100) according to claim 3, wherein the switching element (150) comprises 2-4 indentions (158).

5. The toolholder (100) according to claim 3 or 4, wherein each of the plurality of indentions (158) comprises a first side surface (160) and a second side surface (162), wherein the first side surface (160) is connected to the second side surface (162) at an intersection (164), wherein the first side surface (160) extends from the circumferential side surface (156) to the intersection (164), and wherein the second side surface (162) extends from the circumferential side surface (156) to the intersection (164), wherein the first side surface (160) and the second side surface (162) are planar surfaces.

6. The toolholder (100) according to claim 5, wherein the first side surface (160) and the second side surface (162) are oriented at an angle α to each other, wherein α is 55°-89°.

7. The toolholder (100) according to claim 5 or 6, wherein the first side surface (160) has a cross-sectional area A₁ and wherein the second side surface (162) has a cross-sectional area A₂, wherein A₂ > A₁, and wherein the central axis A is oriented perpendicular to the flow direction F, and wherein the coolant flowing through the internal coolant channel (104) is configured to hit the first side surface (160), causing the switching element (150) to rotate in a rotational direction R around the central axis A.

8. The toolholder (100) according to any of the preceding claims, wherein the switching element (150) is a paddle wheel.

9. The toolholder (100) according to claim 1, wherein the switching element (150) is a pressure relief valve.

10. The toolholder (100) according to any of the preceding claims, wherein the toolholder (100) further comprises a sealing element arranged between the switching element (150) and the inner wall of the internal coolant channel (104).

11. The toolholder (100) according to any of the preceding claims, wherein the switching element (150) has a central axis A, and wherein the switching element (150) has a maximum cross-sectional area A₃ perpendicular to the central axis A, and wherein the toolholder (100) further comprises an opening (116) having a central axis B, and wherein the opening (116) has a cross-sectional area A₄, wherein the central axis B coincides with the central axis A, wherein the switching element (150) is accessible via the opening (116), and wherein A₄ ≥ A₃.

12. The toolholder (100) according to any of the preceding claims, wherein the switching element (150) is secured in the internal coolant channel (104) by a fastening element (170) extending through the switching element (150).

13. The toolholder (100) according to any of the preceding claims, wherein the at least one coolant outlet (108,110) is directed towards the cutting interface (102).

14. A cutting tool (600) comprising:
- a toolholder (100) according to any of the preceding claims;
- a cutting element (200) comprising a cutting edge (202); and
- a fastening element (300), wherein
the cutting element (200) is secured in the cutting interface (102) by the fastening element (300).

15. The cutting tool (600) according to claim 14, wherein the cutting element (200) is a cutting insert comprising a rake surface (204) and a clearance surface (206), wherein the cutting edge (202) is arranged at the intersection between the rake surface (204) and the clearance surface (206), wherein the at least one coolant outlet (108,110) is directed towards the rake surface (204), the clearance surface (206), or the cutting edge (202).
